Europäisches Patentamt

European Patent Office

Office européen des brevets

(11) Veröffentlichungsnummer: **0 400 351**
**A1**

## (12) EUROPÄISCHE PATENTANMELDUNG

(21) Anmeldenummer: 90108440.0

(22) Anmeldetag: 04.05.90

(51) Int. Cl.5: **F27B 9/24, F27B 9/36, B65G 35/00, F27D 3/02**

(30) Priorität: 13.05.89 DE 3915718

(43) Veröffentlichungstag der Anmeldung:
05.12.90 Patentblatt 90/49

(84) Benannte Vertragsstaaten:
**AT BE DE GB IT NL**

(71) Anmelder: **Schniering, Alfred, Dipl.-Ing.**
**Karl-Arnold-Strasse 4**
**D-4930 Gladbeck(DE)**

(72) Erfinder: **Die Erfinder haben auf ihre**
**Nennung verzichtet**

(74) Vertreter: **Patentanwälte Dr. Solf & Zapf**
**Schlossbleiche 20 Postfach 13 01 13**
**D-5600 Wuppertal 1(DE)**

(54) Verfahren und Vorrichtung zum Brennen von Rohren, insbesondere von keramischen Rohren, vorzugsweise von Muffen aufweisenden, aussen glasierten Steinzeugrohren.

(57) Die Erfindung betrifft ein Verfahren zum Brennen von Rohren (20), insbesondere von keramischen Rohren, vorzugsweise von Muffen aufweisenden, außen glasierten Steinzeugrohren, in einem Rollenherdofen (1) mit einer Rollenbahn mit stationär angeordneten Rollen (20), wobei der Transport mit Prismenrollen und/oder -scheiben erfolgt und die Rohre (24) schrittweise transportiert werden. Die Erfindung betrifft ferner eine Vorrichtung zur Durchführung des Verfahrens, wobei die Rollen (20) oder auf den Rollen angeordnete Stützscheiben (23) segmentförmige Ausnehmungen aufweisen.

FIG. 1

EP 0 400 351 A1

# Verfahren und Vorrichtung zum Brennen von Rohren, insbesondere von keramischen Rohren, vorzugsweise von Muffen aufweisenden, außen glasierten Steinzeugrohren

Die Erfindung betrifft ein Verfahren und eine Vorrichtung zum Brennen von Rohren, insbesondere von keramischen Rohren, vorzugsweise von Muffen aufweisenden, innen und außen glasierten Kanalisationssteinzeugrohren im Schnellbrandverfahren. Steinzeugrohre mit Muffe, die z. B. für die Erstellung einer Kanalisation verwendet werden, werden in der Regel aufrechtstehend auf Tunnelofenwagen durch einen Tunnelofen gefahren und dabei gebrannt. Die Verweilzeit eines Steinzeugrohres im Ofen ist sehr lang; sie beträgt in der Regel 30 bis 50 Stunden. Steinzeugrohre bestehen aus keramischem Material, das durch Trocknen und Brennen einer Masse aus keramischen Rohmaterialien verfestigt worden ist. Die keramische Masse schwindet beim Trocknen und Brennen. Die Verfestigung erfolgt über einen Sinterprozeß, bei dem das Material in einen plastischen Zustand gerät. Das Trocknen und Brennen muß daher sehr sorgfältig geregelt durchgeführt werden. Steinzeugrohre sind außerdem außen- und vorzugsweise auch innenseitig glasiert. Das Glasurmaterial bildet während des Brennens eine zähklebrige Schmelze, die nach dem Erkalten einen dichten festen Glasphasenüberzug ergeben soll. Die Steinzeugrohre dürfen während der Schmelzphasenbildung nicht in Kontakt miteinander oder mit anderen Gegenständen kommen, weil andernfalls eine Verklebung oder eine Störung der Glasur bewirkt werden könnte, so daß das Steinzeugrohr unbrauchbar würde. Das bekannte Verfahren erfordert hohe Energiekosten, weil insbesondere auch die Tunnelofenwagen Wärme absorbieren, die verloren geht. Außerdem sind zahlreiche Arbeitsvorgänge erforderlich.

Die Steinzeugrohre schwinden erheblich bei der Einwirkung von Wärmeenergie bzw. bei den durch die Wärmeenergie bewirkten physikalischchemischen Brennreaktionen. Dabei entstehen im Bereich zwischen der Oberfläche des nicht mitschwindenden Tunnelofenwagens und dem schwindenden Steinzeugrohr u.a. auch durch das hohe Gewicht des Steinzeugrohres und durch die rauhe Oberfläche des Tunnelofenwagens Reibkräfte, die zu Deformationen des Steinzeugrohres, insbesondere im Spitzenbereich, führen können. Die Rohrenden können z. B. unrund werden oder sogar reißen, woraus ein unbrauchbares, fehlerhaftes Steinzeugrohr resultieren kann. Außerdem kann die zulässige Shaftdurchbiegung überschritten werden.

Hinzu kommt, daß die Wärmeenergieverteilung im Tunnelofen inhomogen sein kann. Dies ergibt sich insbesondere dadurch, daß die Steinzeugrohre auf einem Tunnelofenwagen so dicht wie möglich gesetzt stehen, daß die Brenngase nicht jedes Rohr gleichmäßig mit Wärmeenergie beaufschlagen können, woraus sogenannter Schwachbrand oder überbranntes, deformiertes Material resultieren können, die zu Ausschußware führen können. Insbesondere ist die Übergangszone zwischen dem Rohr und der Muffe, über die die Last des Rohres in die Muffe geleitet wird, kritisch. Wird diese Zone nicht optimal mit Wärmeenergie versorgt, können Spannungen während des Brennens in diesem Bereich auftreten, die zu Rissen führen und das Rohr unbrauchbar machen.

Es hat nicht an Versuchen gefehlt, das oben beschriebene Verfahren durch ein anderes Verfahren zu ersetzen. Bisher ist jedoch kein anderes technisch durchführbares Verfahren bekannt geworden, mit dem außen glasierte Kanalisationssteinzeugmuffenrohre einwandfrei im Schnellbrandverfahren gebrannt werden können.

Es sind Verfahren beschrieben worden, wonach Rohre ohne Muffen und ohne Glasur liegend und ggf. auch sich um ihre Längsachse drehend transportiert, getrocknet und/oder verfestigt werden können. Diese Verfahren eignen sich aber nicht zum Trocknen oder gar Brennen von glasierten, Muffen aufweisenden Kanalisationssteinzeugrohren aus keramischem Material, weil zum einen keramisches Material besonderer Vorkehrungen hinsichtlich Schwindung und Viskosität bedarf und weil zum anderen die Glasurschmelze eine Kontaktierung mit Gegenständen beim Brennen ausschließt.

Z.B. wird in der DE-OS 29 21 200 ein Verfahren zur Herstellung zylindrischer, keramischer Rohre beschrieben, mit dem eine bessere Wirtschaftlichkeit gewährleistet werden soll und außerdem gewährleistet werden soll, daß die Rundheit der Rohre erhalten bleibt. Die Rohre werden liegend durch die Vorwärmzone und liegend und abrollend durch die Brennzone und liegend durch die Abkühlzone transportiert. Als Transportmittel dienen mit Endlosketten in Verbindung stehende stabförmige Schieber und Träger, die die Rohre berühren müssen. Dies ist jedoch bei glasierten Rohren nicht durchführbar, weil die Glasur, insbesondere wenn sich - wie in der Hauptbrennzone beabsichtigt - die Rohre drehen, beschädigt wird. In der Hauptbrennzone rollen die Rohre zudem auf einer Rampenfläche ab, so daß eine schmelzflüssige, klebrige Glasur teilweise von der Rampenfläche abgetragen würde. Die Rampe soll dafür sorgen, daß die Rohre beim Brennen in viskosem Zustand nicht durchsakken. Wenn die Rohre Muffen aufweisen, sollen diese über die Rollfläche seitlich hinaushängen.

Die Rotation der Rohre ist, abhängig von der Transportgeschwindigkeit, sehr langsam, so daß die an den Brennern vorbeiziehenden Rohrenden punktförmig überhitzt werden.

In der Brennzone sollen die Transportketten durch die Wandung der Rampe gegen unzulässige Wärmeeinwirkung geschützt sein, indem die Schieber lediglich einen Schlitz in der Rampenwandung durchgreifen. Die Schlitze lassen jedoch noch zuviel Wärme durch, so daß die Funktion der Transportkette gefährdet ist. Aufgrund der Kettenlängung durch Wärmedehnung und Gelenkverschleiß wird der Taktweg von Brenner zu Brenner ungenau. Dieses seit langem bekannte Verfahren hat wegen der genannten Nachteile bislang keine Verwirklichung zur Herstellung von Muffen aufweisenden, beidseits glasierten Kanalisationssteinzeugrohren erfahren.

Dem aus der DE-PS 1 268 318 bekannten Verfahren sowie der daraus bekannten Vorrichtung zum Brennen keramischer Gegenstände kreisförmigen Querschnitts haften nahezu die gleichen, oben anhand der DE-OS 29 21 200 beschriebenen Nachteile an. Das gleiche gilt für den Gegenstand der US-PS 2 612 706, der sich mit der Trocknung von Tonrohren befaßt. Die Tonrohre werden bei diesem bekannten Verfahren auf Rollen liegend durch den Trockenofen befördert. Die Rollen werden mit einer Kette in Längsrichtung des Ofens transportiert, wobei sie gleichzeitig um ihre Längsachse drehbar ausgebildet und auf einer auf dem Ofenfundament angeordneten Schiene abrollen, so daß sie sich um ihre Längsachse drehen und bewirken, daß die von ihnen getragenen Tonrohre ebenfalls gedreht werden. Diese Drehung der Tonrohre ermöglicht kürzere Trocknungszeiten.

Im europäischen Patent 0 131 955 wird ein Verfahren zum Brennen keramischer Rohre in einem Rollenherdofen beschrieben, bei dem die Rohre auf Kreisscheiben von Stützrollen liegend durch den Ofen transportiert werden. Die Stützrollen werden dabei mit einer Umfangsgeschwindigkeit gedreht, die unabhängig von der Transportgeschwindigkeit geregelt werden kann, so daß die auf den Kreisscheiben liegenden Rohre gedreht werden, und zwar mit vorwählbarer Geschwindigkeit. In der Sinterzone wird der Transport unterbrochen, die Eigendrehung der Rohre jedoch aufrechterhalten.

Insbesondere nachteilig bei den beschriebenen bekannten Rollenherdöfen ist, daß die Trag- und Stützeinrichtung durch die Brennzone transportiert wird, sich dabei aufheizt und beim Verlassen der Brennzone wieder abgekühlt wird. Das bedeutet, daß sie erheblichen Temperaturwechseln ausgesetzt ist und materialmäßig sowie konstruktiv dementsprechend ausgebildet sein muß.

Neben den Rollenherdöfen, deren Trag- und Stützeinrichtungen transportiert werden, sind auch Brennöfen mit feststehender stationärer Rollenbahn, jedoch sich drehenden Rollen, bekannt (DE-OS 29 47 540, DE-OS 33 01 660). Die Drehung der Rollen bewirkt den Transport des zu brennenden keramischen Gutes, z. B. von Wandplatten oder Fliesen. Um ein Anbacken von z. B. Glasurbestandteilen der zu brennenden Gegenstände an den Rollen zu vermeiden, sollen die als Rohre ausgebildeten Rollen Erhebungen und Vertiefungen aufweisen, so daß sich im Querschnitt sternförmige Rohre ergeben. Die zu brennenden Gegenstände liegen dann nur auf den Erhöhungen auf, wodurch die Berührungsfläche zwischen der Unterseite des zu brennenden Gegenstandes und den Rollen stark verringert ist.

Mit diesen feststehende Rollenbahnen aufweisenden Öfen können keine Rohre, insbesondere keine keramischen Muffenrohre, gebrannt werden, weil sich Rohre mit den stationären Rollen nicht transportieren lassen.

Aus der DE-OS 25 20 462, insbesondere Fig. 16, ist ein Wärmeschrank mit einer Transportvorrichtung bekannt, mit der Rohre unter Eigendrehung mit rohrförmigen Stangen durch den Wärmeschrank transportiert werden. Die in Schlitzen geführten Enden der Stangen liegen auf Kurbelzapfen von senkrecht zur Längserstreckung der Stangen angeordneten, angetriebenen, sich drehenden Kurbelwellen auf. Die Winkelversetzung der Kurbelzapfen ist so gewählt, daß die Stangen eine Auflageeinrichtung mit sinusförmigem Gang bilden. Aufgrund der ständigen Drehung der Kurbelwellen verändert sich die von den Stangen gebildete Auflageeinrichtung mit sinusförmigem Gang fortschreitend unter Aufrechterhaltung des gleichen Taktes und der gleichen Amplitude. Daraus resultiert eine überlagerte Translations-Rotationsbewegung der Rohre.

Das Brennen von keramischen Rohren mit dieser bekannten Vorrichtung wäre wegen der hohen Anwendungstemperaturen ungünstig. Außerdem ist die bekannte Vorrichtung kompliziert aufgebaut; denn die Hubbewegung der Stangen erfordert einen erheblichen konstruktiven Aufwand, insbesondere wegen der Abdichtungsprobleme in den Ofenseitenwänden.

Aufgabe der Erfindung ist, ein Verfahren und eine Vorrichtung aufzuzeigen, bei denen mit einfachen stationären Mitteln ein schonender Transport von zu brennenden Rohren unter Eigendrehung und beim Brennen ohne Weitertransport unter Eigendrehung möglich ist. Bei vorzugsweise taktendem Transport soll der Transportweg genau definiert sein. Diese Aufgabe wird durch die Merkmale der Ansprüche 1 und 7 gelöst. Vorteilhafte Weiterbildungen der Erfindung werden in den von diesen Ansprüchen abhängigen Unteransprüchen gekennzeichnet. Anhand der Zeichnung wird die Erfindung im folgenden beispielhaft näher erläutert. Es zeigen:

Fig. 1 einen vertikalen Längsschnitt durch einen erfindungsgemäßen Rollenherdofen,

Fig. 2 einen Querschnitt durch den Ofen nach Fig. 1,

Fig. 3 einen horizontalen Längsschnitt durch den Ofen nach Fig. 1,

Fig. 4 eine Frontansicht einer Rolle der Rollenbahn mit schematisch angedeutetem Ofen,

Fig. 5 eine schematische Seitenansicht der Rollenbahn mit einer Ausführungsform der Stützscheiben in Drehantriebsstellung,

Fig. 6 eine schematische Seitenansicht der Rollenbahn in Transportübergabestellung,

Fig. 7 eine schematische Seitenansicht der Rollenbahn in Transportübernahmestellung,

Fig. 8 eine schematische Seitenansicht der Rollenbahn in Drehantriebsstellung nach der Übernahme der Rohre,

Fig. 9 eine schematische Seitenansicht der Rollenbahn mit einer anderen Ausführungsform der Stützscheiben,

Fig. 10 eine Seitenansicht einer Stützscheibe der Rollenbahn gemäß Fig. 9,

Fig. 11 eine Seitenansicht einer dritten Ausführungsform einer Stützscheibe einer Rollenbahn,

Fig. 12 schematisch eine Seitenansicht einer weiteren Ausführungsform einer Rollenbahn mit Abrollbalken,

Fig. 13 schematisch eine Seitenansicht eines anderen Abrollbalkens einer Rollenbahn,

Fig. 14 schematisch einen Teil eines Querschnitts durch den Ofen mit einer Führungseinrichtung für die Rohre,

Fig. 15 schematisch eine andere Führungseinrichtung,

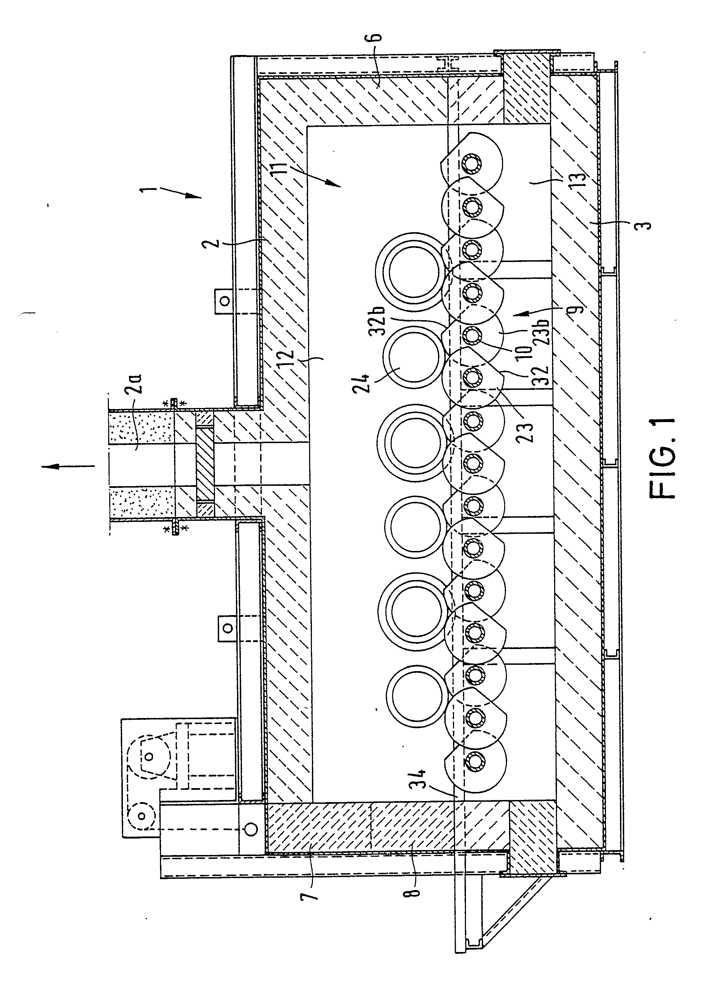

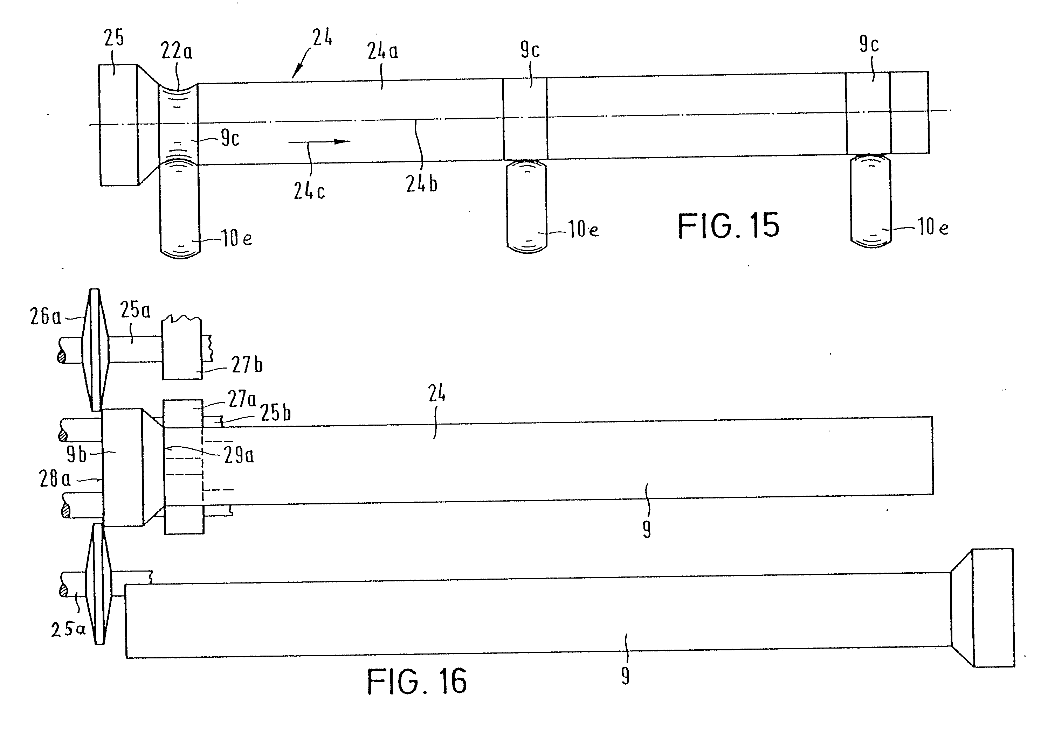

Fig. 16 schematisch eine weitere Führungseinrichtung. Der feuerfest ausgekleidete Rollenofen 1 gemäß den Fig. 1 bis 3 weist ein Deckengewölbe 2, einen Ofenboden 3 und die Seitenwände 4 und 5 auf. Der abgebildete Ofen hat zudem eine Rückwand 6 und eine Frontwand 7. Die Frontwand verfügt über einen Ofenlochstein 8 zum Öffnen und Verschließen des Ofens. In der Regel ist der Rollenofen 1 jedoch als Durchlaufofen ausgeführt mit entsprechenden Schleusen anstelle der Wandungen 6 und 7. Im Gewölbe können Abgasöffnungen 2a eingebracht sein; Abgasöffnungen können aber auch in anderer Weise und an anderer Stelle vorgesehen sein.

Der Rollenofen 1 ist mit einer Rollenbahn 9 ausgerüstet, die mehrere in Längsrichtung des Ofens auf gleichen Abstand voneinander angeordnete, in einer Ebene, vorzugsweise in einer horizontalen Ebene, liegende, stationär gelagerte Rollen 10 aufweist. Die Rollenbahn 9 befindet sich im Abstand über dem Ofenboden 3 und teilt den Ofeninnenraum 11 in einen oberen Brennraum 12 und einen unteren Ofenraum 13; sie erstreckt sich in Längsrichtung des Ofens somit von der Rückwand 6 zur Frontwand 7.

Durch die Seitenwände 4, 5 ragen sich gegenüberliegend oder versetzt horizontal angeordnete, zur vertikalen Längsmittenebene 15 gerichtete, in Längsrichtung des Ofens auf Abstand aneinandergereihte Brenner 14, die in geringem Abstand über der Rollenbahn, vorzugsweise im Mittelpunkt der keramischen Rohre, positioniert sind.

Die Rollen 10 durchgreifen entsprechende Löcher in den Seitenwänden 4, 5, wobei ihre Rollenstümpfe 10 a, 10 b aus dem Ofen 1 ragen und Kupplungselemente 16 für ein Antriebsmittel 17 a, 17 b tragen. Geeignet ist jedes Antriebsmittel, das nach der Erfindung die Rollen 10 gleichzeitig, gleichmäßig und gleichsinnig, d.h. mit gleicher Drehrichtung, um ihre Längsachse 10 c antreibt, wobei eines der Antriebsmittel 17 a (oder 17 b) eine bestimmte Drehrichtung 18 (oder 19) und das andere Antriebsmittel 17 b (oder 17 a) die entgegengesetzte Drehrichtung 19 (oder 18) erzeugt.

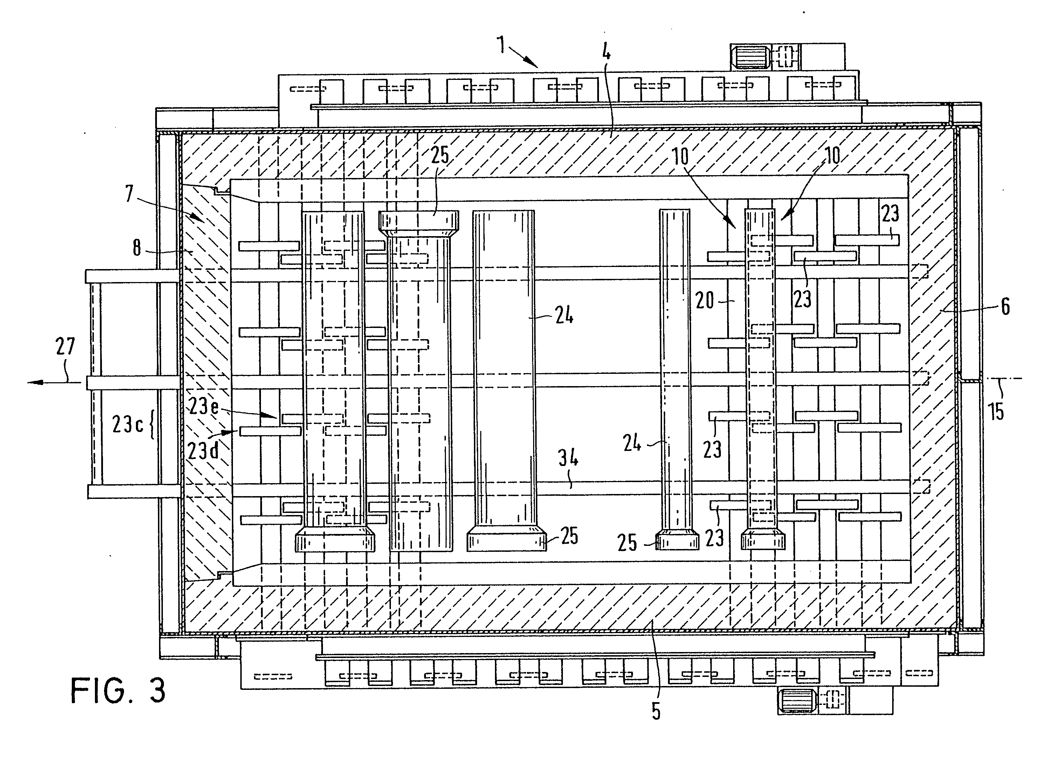

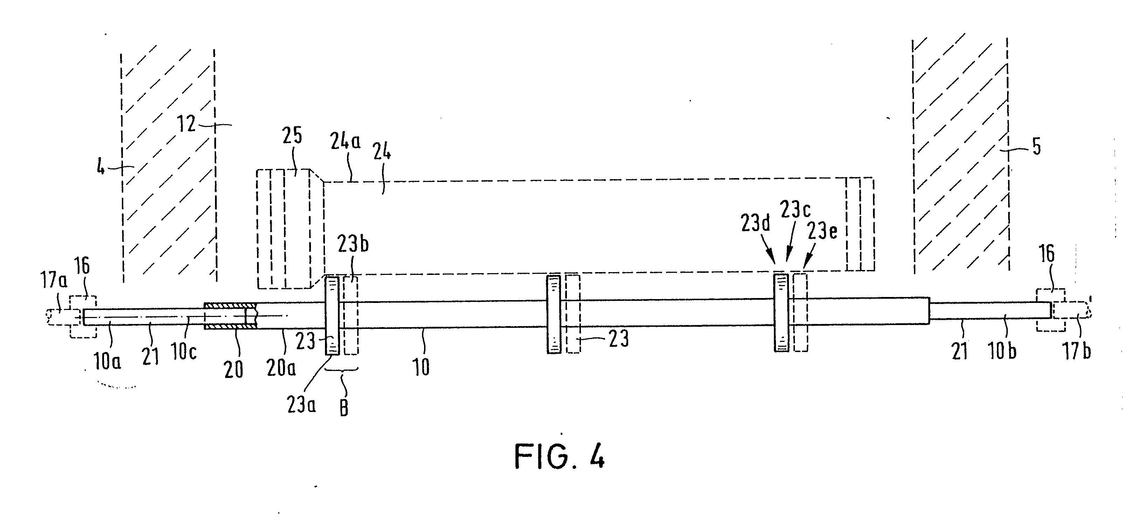

Die Rolle 10 ist z.B. aus einem Rollenrohr 20 aufgebaut, in dessen Endbereiche Wellenstümpfe 21 eingesetzt sind (Fig. 4). Wesentlich ist, daß die Rollenrohre im im Ofeninnenraum 11 liegenden Abschnitt mit Stützscheiben 23 als Tragelemente für die zu brennenden Gegenstände besetzt sind, die drehfest auf dem jeweiligen Rollenrohr 20 lagern. Dabei sind mehrere Stützscheiben 23 auf einem Rollenrohr 20 im Abstand - vorzugsweise im gleichen Abstand - voneinander angeordnet. Jede Rolle 10 des Rollenofens gemäß den Fig. 1 bis 3 tragen z. B. vier Stützscheiben 23; die Rolle 10 der Rollenbahn gemäß Fig. 4 trägt lediglich drei Stützscheiben 23. Die Anzahl der Stützscheiben richtet sich nach dem zu tragenden Gewicht. Als zu tragende und zu brennende Gegenstände sind Muffen 25 aufweisende Steinzeugrohre 24 dargestellt, für die der erfindungsgemäße Rollenofen insbesondere eingesetzt werden kann. Der erfindungsgemäße Rollenofen ist für Steinzeugrohre 24 unterschiedlichen Durchmessers verwendbar, wie Fig. 3 zeigt. Bei Steinzeugrohren 24 großen Durchmessers werden die Rohre vorzugsweise in Folge wechselnd, d.h. das eine Steinzeugrohr mit der Muffe 25 zur Seitenwand 4 und das folgende mit der Muffe 25 zur Seitenwand 5 weisend auf den Stützscheiben 23 gelagert. Der Durchmesser der Stützscheibe ist erfindungsgemäß so groß gewählt, daß zwischen der Muffe 25 eines Steinzeugrohres 24 und der Mantelfläche eines Rollenrohres 20 ein Abstand verbleibt und die Muffe seitlich zwischen der jeweiligen Seitenwand 4 oder 5 und der jeweils außenseitigen letzten Stützscheibe 23 angeordnet ist (siehe Fig. 4).

Erfindungsgemäß ist der Abstand benachbarter Rollenrohre 20 voneinander in der Rollenbahn 9

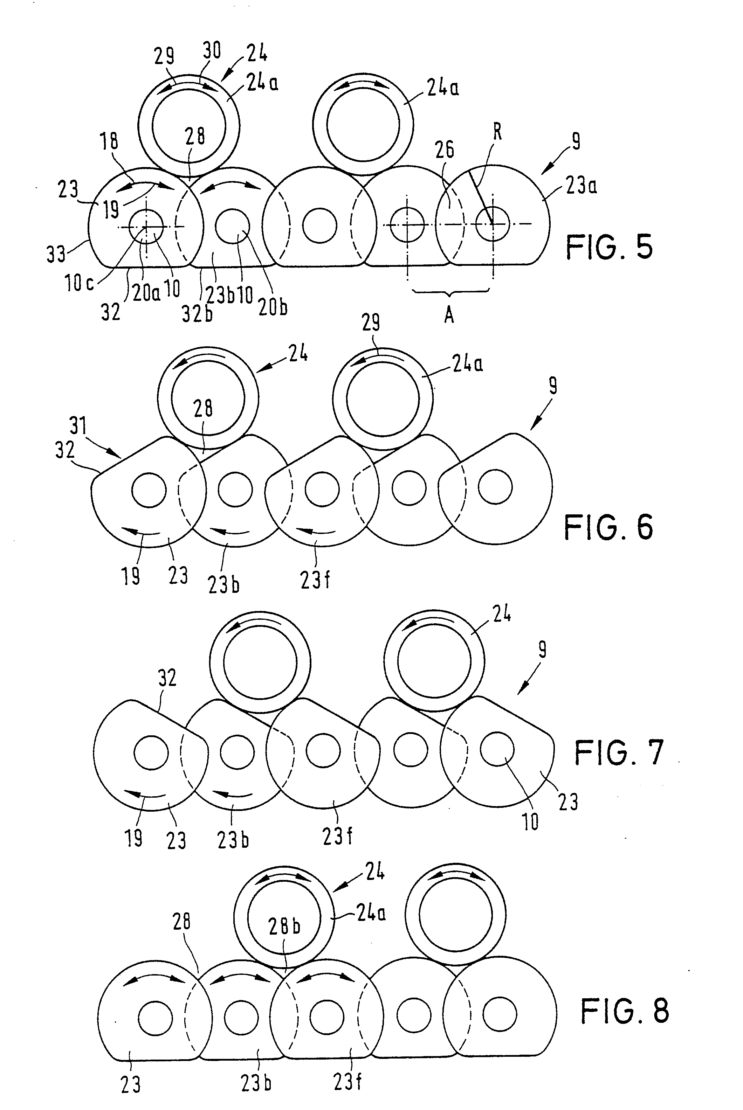

und der Durchmesser der Stützscheiben 23 so gewählt, daß die Umfangsringfläche 23 a einer Stützscheibe nur in geringem Abstand von der Mantelfläche 20 a·der beiden benachbarten Rollenrohre 20 angeordnet ist, so daß sich die Flächen 20 a und 23 a nicht berühren. Im Zusammenhang damit sind die Stützscheiben 23 b eines zu einem bestimmten Rollenrohr 20 benachbarten Rollenrohres 20 b seitlich derart versetzt zu den Stützscheiben 23 des einen bestimmten Rollenrohres 20 angeordnet, daß sich die Stützscheiben 23 und 23 b seitlich überlappen. Der Radius R der Stützscheibe 23, 23 b ist demgemäß größer, als die Hälfte des Abstandes A zwischen zwei benachbarten Rollenrohren 20 beträgt (Fig. 5), so daß sich ein Überlappungsbereich 26 ergibt. Die seitliche Versetzung ist so gering wie möglich gewählt, damit die sich aus der Versetzung ergebende Tragbreite B einer Stützscheibenreihe 23 c so klein wie möglich bleibt (Fig. 4). Eine Stützscheibenreihe 23 c ergibt sich somit aus der Stützscheibenreihe 23 d, die aus den in Längsrichtung bzw. Transportrichtung 27 (Fig. 3) hintereinander angeordneten Stützscheiben 23 gebildet wird, die jeweils auf jedem übernächsten Rollenrohr 20 sitzen, und der Stützscheibenreihe 23 e, die aus den in Transportrichtung 27 hintereinander angeordneten Stützscheiben 23 b gebildet wird und die auf den zwischen den Rollenrohren 20 angeordneten, jeweils übernächsten Rollenrohren 20 b sitzen.

In den keilförmigen Zwickeln 28 zwischen zwei zusammenwirkenden Stützscheiben 23 und 23 b (Fig. 5) lagern die Rohrschäfte 24 a der Rohre 24. Durch die gleichsinnige Drehung der Stützscheiben 23, 23 b z. B. in Richtung 19 werden die Rohre 24 mit entgegengesetzter Drehrichtung 29 gedreht (Fig. 6). Da die Stützscheiben 23, 23 b auch in die Drehriohtung 18 antreibbar sind, können die Rohre 24 auch in die zur Drehrichtung 29 entgegengesetzte Drehrichtung 30 gedreht werden (Fig. 5).

Erfindungsgemäß werden die quer zur Transportrichtung 27 liegenden, zu brennenden Gegenstände mit den stationär angeordneten Stützscheiben 23, 23 b in oder gegen die Transportrichtung 27 translatorisch transportiert. Zu diesem Zweck sind die Stützscheiben als Segmentstützscheiben ausgebildet und weisen .z. B. Sehnensegmentabschnitte 31 auf, woraus gerade Sehnentragkanten 32, 32 b resultieren, wobei die Sehnentragkante 32 zur Stützscheibe 23 und die Sehnentragkante 32 b zur Stützscheibe 23 b gehören. Die Sehnentragkanten befinden sich im Abstand über der Mantelfläche 20 a des Rollenrohres 20, und zwar so weit, daß die Muffen 25 der Muffenrohre 24 nicht in Kontakt mit der Mantelfläche 20 a bzw. mit der Tragrolle 10 der Tragrollenbahn 9 kommen, wenn der Rohrschaft 24· a auf den zusammenwirkenden Sehnentragkanten 32, 32 b aufliegt.

Die gleichlangen Sehnentragkanten 32, 32 b aller Stützscheiben weisen vorzugsweise die gleiche Ausrichtung an den gleichen Stellen der Stützscheiben 23, 23 b auf, so daß sie in einer den Muffenrohren 24 abgewandten Stellung und in einer die Muffenrohre 24 tragenden, um 180° gedrehten Stellung miteinander in einer Ebene fluchtend und in den anderen davon abweichenden Stellungen parallel versetzt zueinander angeordnet sind. Die Länge einer Sehnentragkante 32, 32 b ist so gewählt, daß die Länge der verbleibenden Umfangsscheibenkante 33 der Stützscheiben 23, 23 b ausreicht, das Muffenrohr 24 um mindestens 180° in Drehrichtung 29 oder 30 zu drehen, bevor es mit einer der Sehnentragkanten 32 oder 32 b in Kontakt kommt.

Vorzugsweise wirken jeweils zwei Stützscheiben 23, 23 b paarweise zusammen und tragen ein Muffenrohr 24. Ein anderes Muffenrohr wird von zwei anderen Stützscheiben getragen, so daß ein Zwickel 28 freibleibt. Diese Verteilung der Muffenrohre erfolgt jedoch nur, wenn der Abstand zwischen zwei Muffenrohren geringer als ihr Durchmesser bzw. der Durchmesser ihrer Muffen ist, weil sie sich andernfalls berühren würden.

Durch die Abschnitte 31 bzw. die als Tragkanten fungierenden Sehnenkanten 32, 32 b wird bewirkt, daß die Muffenrohre 24 bzw. die zu brennenden Gegenstände, sobald sie mit den Sehnentragkanten in Kontakt kommen, sich drehend abgesenkt und danach sich drehend wieder angehoben werden, wobei sie translatorisch zu einer benachbarten Stützscheibe 23 f befördert werden, so daß dann die Stützscheiben 23 b, 23 f paarweise zusammenwirken, wie sich aus den Fig. 5, 6, 7 und 8 ohne weiteres ergibt. Das Muffenrohr 24, das sich in Fig. 5 im Zwickel 28 zwischen den Stützscheiben 23, 23 b befunden hatte, befindet sich in Fig. 8 im Zwickel 28 b zwischen den Stützscheiben 23 b, 23 f und hat seine Position gemäß den Fig. 6 und 7 entgegen der Transportrichtung 27 verändert, weil die Stützscheiben aus der Position nach Fig. 5 um 360° in Drehrichtung 19 in die Position gemäß Fig. 8 verdreht worden sind. Bei entsprechender Drehung der Stützscheiben in Drehrichtung 18 würde das Muffenrohr 24 in Transportrichtung 27 über die Positionsphase der Fig. 8, 7, 6 in die Positionsphase gemäß Fig. 5 wandern. Auf diese Weise gelingt es, die Muffenrohre 24 in Transportrichtung 27 vor und zurück und/oder in und aus dem Rollenofen und/oder bei einem Durchlaufofen (nicht dargestellt) in und durch den Ofen zu befördern. Dabei kann die Verweilzeit der Muffenrohre im Ofen vorbestimmt werden. Die Muffenrohre können bei Bedarf kontinuierlich schrittweise und sich in Richtung 29 oder 30 drehend durch den Ofen transportiert werden. Sie können während des schrittweisen Transports durch den Ofen, aber auch - was bevorzugt wird -schrittweise vor- und zurücktransportiert und im Stillstand einmal oder mehrmals die Drehrichtung wechselnd gedreht werden. Ferner kann dabei vorgesehen sein, die Drehung kurzzeitig zu stoppen.

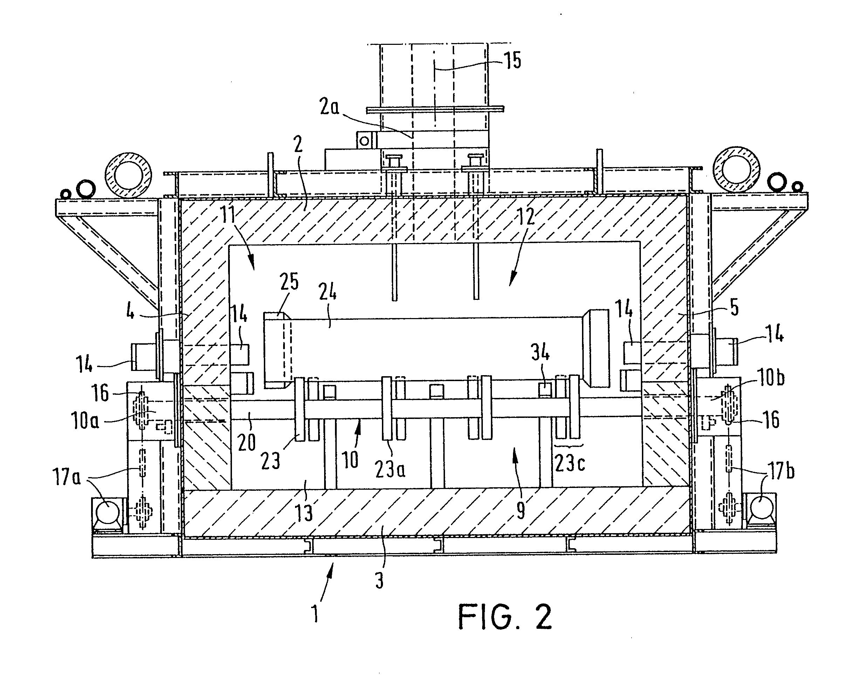

Mit der Erfindung ist es somit gelungen, ein bezüglich der Beförderung der zu brennenden Gegenstände optimales Transportsy stem zu schaffen, dessen Bewegungsabläufe weitgehend auf die Brennerfordernisse abstimmbar und das stationär im Ofen angeordnet ist, so daß die Bestandteile des Transportsystems keinen schädigenden Temperaturwechseln ausgesetzt sind. Das Transportsystem eignet sich insbesondere für Rollenherdöfen mit zentrischem Erwärmen der zylindrischen Hohlkörper, in denen die Brenner - wie Fig. 2 zeigt - seitlich so angeordnet sind, daß das Brennmittel ins Innere der Hohlkörper gestrahlt wird.

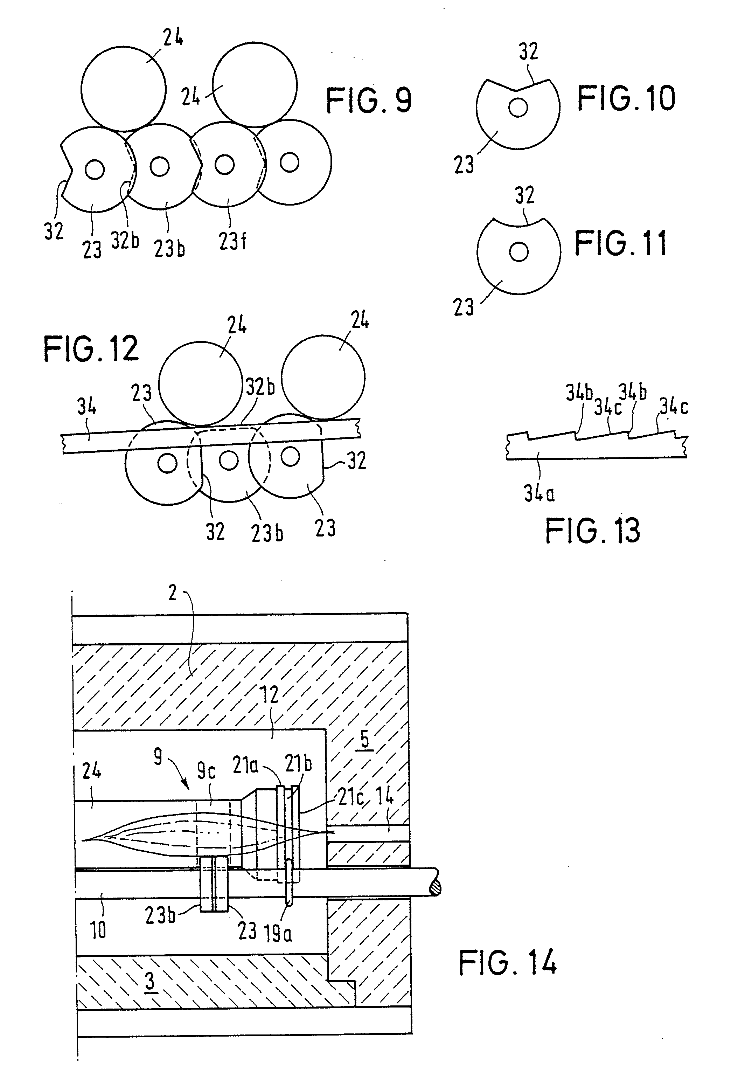

Bevorzugte andere Ausführungsformen der Segmentstützscheiben 23, 23 b, 23 f zeigen die Fig.9, 10 und 11. In den Fig. 9 und 10 erkennt man eine Stützscheibenreihe mit Segmentstützscheiben, bei denen ein sektorförmiges Segment ausgespart ist, so daß eine V-förmige Tragkante 32, 32 b gebildet wird. Die V-Spitze der Tragkante ist dabei im Abstand von der Mantelfläche 20 a angeordnet, so daß für den Fall, daß Muffenrohre getragen werden müssen, die Muffen im Abstand von der Mantelfläche bleiben. Der Winkel zwischen den vorzugsweise gleich langen Tragkantenschenkeln der Tragkanten 32, 32 b beträgt vorzugsweise etwa 150°, ist aber ebenso wie die Länge der Tragkantenschenkel abhängig vom Durchmesser der Stützscheibe, dem Durchmesser des zu brennenden zylindrischen Hohlkörpers und dem Drehwinkel, mit dem die Hohlkörper nach rechts oder links gedreht werden soll. In Fig. 11 ist eine zweckmäßige konkavbogenförmige Tragkante dargestellt, die eine besonders weiche bzw. ruckfreie Übergabe des Hohlkörpers gewährleistet.

Eine besondere Ausführungsform der Erfindung sieht vor, daß die Tragkanten 32 zu den Tragkanten 32 b um 90° versetzt zueinander angeordnet sind, wie sich aus Fig. 1 ergibt. In Kombination damit können neben den Stützscheibenreihen 23 c in Höhe kurz über den Mantelflächen 20 a sich parallel zu den Stützscheibenreihen erstreckende Tragbalken 34 vorgesehen sein, auf die die Hohlkörper 24 abgesetzt werden, wenn sie in den Bereich einer Tragkante 32, 32 b kommen. Die Hohlkörper werden von einer Tragkante 32 oder 32 b angehoben und an die nächste Stützscheibe 23 b oder 23 weitergegeben. Ein Hohlkörper wird so mit Zwickel zwischen dieser Stützscheibe und der folgenden Stützscheibe drehend getragen.

Besonders vorteilhaft ist, die Tragbalken 34 in Transportrichtung 27 nach unten geneigt anzuordnen, wie Fig. 12 verdeutlicht. Danach wird die Übergabe der Hohlkörper 24 in Transportrichtung 27 von einem zum anderen Stützscheibenpaar erleichtert. Zum gleichen Zweck kann aber auch ein Tragbalken 34 a gemäß Fig. 13 dienen, der zwar horizontal angeordnet ist, jedoch eine sägezahnartige gestufte Tragkante mit hintereinander gereihten gleichen Stufen aufweist mit jeweils einer vertikalen Stufenkante 34 b und einer in Richtung Transportrichtung 27 von der Stufe 34 b zur nächsten Stufe 34 b abfallenden Schräge 34 c. Die Stützscheibentragkanten 32, 32 b, 32 f heben die Hohlkörper über eine Stufe 34 b und setzen sie auf einer Schräge 34 c ab, auf der sie ein Stück zur nächsten Stützscheibe rollen.

Es liegt im Rahmen der Erfindung, anstelle von ausgesparten Segmenten bzw. anstelle von Segmentstützscheiben für den translatorischen Transport der Hohlkörper Stützscheiben mit wulstartigen, den Durchmesser erweiternden Vorsprüngen (nicht dargestellt) und/oder mit exzentrisch angeordneten Stützscheiben zu bewerkstelligen. Es liegt außerdem im Rahmen der Erfindung, auf die Stützscheiben zu verzichten und die Tragrohre 20 bzw. die Tragrollen 10 im Querschnitt betrachtet wie die Stützscheiben, d.h. mit entsprechenden Ausschnitten und/oder Wülsten, zu versehen, wenn das zu brennende Produkt vollflächig aufliegen kann.

Werden dagegen außen glasierte Muffenrohre 24 gebrannt, werden nach einer Ausführungsform der Erfindung die Zonen der Rohrschäfte 24 a als Abrollringflächen 9c glasurfrei belassen, die mit den Bestandteilen der Rollenbahn des Rollenherdofens in Kontakt kommen. Es ist bekannt, daß die glasurfreien Abrollringflächen 9 c die Qualität des gebrannten Kanalisationssteinzeugmuffenrohres 24 nicht beeinträchtigen.

Des weiteren werden zweckmäßigerweise beim Brennen von Kanalisationssteinzeugmuffenrohren Mittel zum Verhindern des Driftens des Muffenrohres beim Drehen des Rohres und beim Transport vorgesehen. Zweckmäßigerweise werden dazu Kanalisationssteinzeugmuffenrohre mit einem an der Muffe 25 angeordneten sogenannten Setzring 21 c verwendet, der z. B. gemäß der Lehre der DE-AS 26 05 196 hergestellt ist. Die Setzringmantelfläche 21 a ist vorzugsweise ebenfalls unglasiert.

Nach einer Ausführungsform der Erfindung (Fig. 14) sind Stützringe 19 a vorzugsweise frei drehend auf den Tragrollen 10 seitlich des Setzringes 21 c angeordnet. Die Stützringe 19 a stehen im Rollkontakt mit dem jeweiligen Setzring 21 c, so daß ein seitliches Driften verhindert wird.

Andere erfindungsgemäße Führungsmittel gegen seitliches Driften der Kanalisationssteinzeugmuffenrohre 24 sind in den Fig. 15 und 16 erkennbar.

Gemäß Fig. 15 ist eine als konkave Rille 22 a ausgebildete glasurfreie Abrollfläche 9 c dicht hinter der Muffe 25 im Übergang zum Rohrschaft 24 a des Kanalisationssteinzeugmuffenrohres 24 eingebracht, in die formschlüssig ein entsprechend ballig ausgeführter Stützring 10 a greift. Die anderen Stützringe 10 a sind vorzugsweise ebenfalls ballig ausgebildet, so daß nur eine schmale Berührungszone mit den Abrollflächen 9 c gegeben ist, die demgemäß entsprechend schmal ausgeführt sein kann (nicht dargestellt). Zweckmäßigerweise dienen die Stützscheiben 23, 23 b, 23 f gleichzeitig als Stützringe und sind entsprechend ballig ausgeführt. Sie greifen in entsprechend konkave Rillen.

Vorzugsweise ist insbesondere bei dieser Ausführungsform der Führungsmittel die Längsachse 24 b des Kanalisationssteinzeugmuffenrohres 24 zum Muffenende entgegengesetzten Ende hin etwas nach unten geneigt gelagert, z. B. um 1 bis 2°, so daß das Kanalisationssteinzeugmuffenrohr 24 dazu neigt, mit der Muffe gegen den in die Rille 22 a eingreifenden Stützring 10 a zu stoßen, so daß das Driften in Pfeilrichtung 24 c zwar provoziert, jedoch begrenzt wird.

Die schiefe, nicht dargestellte Lage des Kanalisationssteinzeugmuffenrohres 24 kann durch eine entsprechend schiefstehende Achse der Tragrollen 10 oder durch eine entsprechende Durchmesserreduzierung der zum in die Rille 22 a greifenden Stützring 10 a seitlich auf Abstand benachbarten weiteren Stützring 10 a gewährleistet sein, wobei der Durchmesser von Stützring zu Stützring kontinuierlich vermindert sein kann (nicht dargestellt). Ebenso können die Durchmesser der seitlich benachbarten Stützscheiben entsprechend vermindert sein, wenn die Stützscheiben gleichzeitig als Stützringe verwendet werden.

Die Fig. 16 läßt ein anderes Führungsmittel gegen seitliches Driften erkennen. Auf einer Achse 25 a sitzen auf seitlichem Abstand eine Scheibe 26 und ein Stützring 27 b. Der Stützring 27 b rollt auf der vorzugsweise unglasierten Mantelfläche 9 c des Kanalisationssteinzeugmuffenrohres 24 ab, die unmittelbar hinter der Muffenkante 29 a angeordnet ist, während die Seitenfläche der Scheibe 26 a gegen die Frontkante 28 a der Muffe 25 oder eines Setzringes (nicht dargestellt) stößt. Dabei können die Scheibe 26 a und/oder der Stützring 27 b frei drehbar oder fest auf der Achse 25 a sitzen. Im letzteren Fall wird die Achse 26 a angetrieben oder ist frei drehbar.

Vorteilhaft kann sein, die Scheibe 26 a auf einer Achse 25 a und den Stützring 27 a auf einer separaten, parallel zur Achse 25 a verlaufenden Achse 25 b anzuordnen und beide Achsen zur Vermeidung einer Reibung zwischen der Scheibe 26 a bzw. dem Stützring 27 b und dem Kanalisationssteinzeugmuffenrohr 24 mit entsprechend unterschiedlichen Geschwindigkeiten anzutreiben. Auch in diesem Fall können aber die Scheibe 26 a und der Stützring 27 b frei drehbar auf den Achsen 25 a bzw. 25 b sitzen, wobei die Achsen nicht angetrieben sind. In allen Fällen können - wie oben bereits erwähnt - als Stützringe die Stützscheiben 23 bzw. 23 b dienen.

**Ansprüche**

1. Verfahren zum Brennen von Rohren, insbesondere von keramischen Rohren, vorzugsweise von Muffen aufweisenden, außen glasierten Steinzeugrohren, in einem Rollenherdofen mit einer Rollenbahn mit stationär angeordneten Rollen, **dadurch gekennzeichnet,** daß der Transport mit Prismenrollen und/oder -scheiben erfolgt und die Rohre schrittweise transportiert werden.

2. Verfahren nach Anspruch 1, **dadurch gekennzeichnet,** daß sie zwischenzeitlich zwischen den Weitertransportschritten stationär gedreht werden.

3. Verfahren nach Anspruch 1 und/oder 2, **dadurch gekennzeichnet,** daß die Rohre mit wechselnden Drehrichtungen gedreht werden.

4. Verfahren nach einem oder mehreren der Ansprüche 1 bis 3, **dadurch gekennzeichnet,** daß die Rohre beim schrittweisen Weitertransport abgesenkt und angehoben werden.

5. Verfahren nach einem oder mehreren der Ansprüche 1 bis 4, **dadurch gekennzeichnet,** daß die Rohre schrittweise vor und zurück transportiert werden.

6. Verfahren nach einem oder mehreren der Ansprüche 1 bis 5, **dadurch gekennzeichnet,** daß außen glasierte Steinzeugrohre, vorzugsweise Muffen aufweisende Steinzeugrohre, gebrannt werden, die an den Rollenauflageflächen ringförmige, glasurfreie Oberflächen aufweisen.

7. Vorrichtung zum Brennen von Rohren, insbesondere von keramischen Rohren, vorzugsweise von Muffen aufweisenden, außen glasierten Steinzeugrohren, mit einer Rollenbahn, die aus stationär angeordneten Rollen aufgebaut ist, insbesondere zur Durchführung des Verfahrens nach einem oder mehreren der Ansprüche 1 bis 6, **dadurch gekennzeichnet,** daß die Rollen (10) oder auf den Rollen (10) angeordnete Stützscheiben (23) segmentförmige Ausnehmungen aufweisen.

8. Vorrichtung nach Anspruch 7, **dadurch gekennzeichnet,** daß die Rollen (10) der Rollenbahn (9) Stützscheiben (23, 23 b) aufweisen, bei denen die Ausschnitte Sehnensegmentabschnitte (31) bilden, die gerade Sehnentragkanten (32, 32 b) aufweisen, wobei die Sehnentragkante (32) zur Stützscheibe (23) und die Sehnentragkante (32 b) zur Stützscheibe (23 b) gehören.

9. Vorrichtung nach Anspruch 7 und/oder 8, **dadurch gekennzeichnet,** daß sich die Sehnentragkanten im Abstand über der Mantelfläche (20 a) des Rollenrohres (20) befinden, so daß Muffen (25) eines Muffenrohres (24) nicht in Kontakt mit der Mantelfläche (20 a) bzw. mit der Tragrolle (10) der Tragrollenbahn (9) kommen, wenn der Rohrschaft (24 a) auf den zusammenwirkenden Sehnentragkanten (32, 32 b) aufliegt.

10. Vorrichtung nach einem oder mehreren der Ansprüche 7 bis 9, **dadurch gekennzeichnet, daß** die gleich langen Sehnentragkanten (32, 32 b) aller Stützscheiben die gleiche Ausrichtung an den gleichen Stellen der Stützscheiben (23, 23 b) aufweisen, so daß sie in einer den Muffenrohren (24) abgewandten Stellung und in einer die Muffenrohre (24) tragenden, um 180° gedrehten Stellung miteinander in einer Ebene fluchtend und in den anderen davon abweichenden Stellung parallel versetzt zueinander angeordnet sind.

11. Vorrichtung nach einem oder mehreren der Ansprüche 7 bis 10, **dadurch gekennzeichnet,** daß die Länge einer Sehnentragkante (32, 32 b) so gewählt ist, daß die Länge der verbleibenden Umfangsscheibenkante (33) der Stützscheiben (23, 23 b) ausreicht, das Muffenrohr (24) um mindestens 180° in Drehrichtung (29) oder (30) zu drehen, bevor es mit einer Sehnentragkante (32) oder (32 b) in Kontakt kommt.

12. Vorrichtung nach einem oder mehreren der Ansprüche 7 bis 11, **dadurch gekennzeichnet,** daß jeweils zwei Stützscheiben (23, 23 b) paarweise zusammenwirken und ein Muffenrohr (24) tragen, wobei das andere Muffenrohr von zwei anderen Stützscheiben getragen wird, so daß ein Zwikkel (28) freibleibt.

13. Vorrichtung nach einem oder mehreren der Ansprüche 7 bis 12, **dadurch gekennzeichnet,** daß eine Stützscheibenreihe mit Segmentstützscheiben aufgebaut ist, bei denen ein sektorförmiges Segment ausgespart ist, so daß eine V-förmige Tragkante (32, 32 b) gebildet wird.

14. Vorrichtung nach Anspruch 13, **dadurch gekennzeichnet, daß** der Winkel zwischen den gleich langen Tragkantenschenkeln der Tragkanten (32, 32 b) etwa 150° beträgt.

15. Vorrichtung nach einem oder mehreren der Ansprüche 7 bis 12, **dadurch gekennzeichnet,** daß die Tragkante der Stützscheiben konkavbogenförmig ausgebildet ist.

16. Vorrichtung nach einem oder mehreren der Ansprüche 7 bis 15, **dadurch gekennzeichnet,** daß die Tragkanten (32) zu den Tragkanten (32 b) um 90° versetzt zueinander angeordnet sind.

17. Vorrichtung nach einem oder mehreren der Ansprüche 7 bis 16, **dadurch gekennzeichnet,** daß neben den Stützscheibenreihen (23 c) in Höhe kurz über den Mantelflächen (20 a) sich parallel zu den Stützscheibenreihen erstreckende Tragbalken angeordnet sind, auf die die Hohlkörper (24) abgesetzt werden, wenn sie in den Bereich einer Tragkante (32, 32 b) kommen.

18. Vorrichtung nach Anspruch 16 und/oder 17, **dadurch gekennzeichnet, daß** die Tragbalken (34) in Transportrichtung (27) nach unten geneigt angeordnet sind.

19. Vorrichtung nach Anspruch 16 und/oder 17, **dadurch gekennzeichnet, daß** der Tragbalken (34 a) eine sägezahnartige, gestufte Tragkante mit hintereinander gereihten gleichen Stufen aufweist mit jeweils einer vertikalen Stufenkante (34) und einer in Richtung Transportrichtung (27) von der Stufe (34 b) zur nächsten Stufe (34 b) abfallende Schräge (34 c).

20. Vorrichtung nach einem oder mehreren der Ansprüche 7 bis 19, **dadurch gekennzeichnet,** daß neben der Rollenbahn (9) sich gegenüberliegend horizontal angeordnete, zur vertikalen Längsmittenebene (15) gerichtete, in Längsrichtung des Ofens auf Abstand aneinandergereihte Brenner (14) im geringen Abstand über der Rollenbahn, vorzugsweise in Steinzeugrohr-Mitte, positioniert im Ofen (1) vorgesehen sind.

21. Vorrichtung nach einem oder mehreren der Ansprüche 7 bis 20, **dadurch gekennzeichnet,** daß die Rollen (10) durch die Seitenwände des Ofens (1) führen, wobei ihre Rollenstümpfe (10 a, 10 b) aus dem Ofen (1) ragen und Kupplungselemente (16) für ein Antriebsmittel (17 a, 17 b) tragen.

22. Vorrichtung nach Anspruch 21, **dadurch gekennzeichnet, daß** die Rollen (10) gegenläufig antreibbar sind.

23. Vorrichtung nach einem oder mehreren der Ansprüche 6 bis 20, **dadurch gekennzeichnet,** daß die Stützscheiben (23) drehfest auf den Rollen (10) angeordnet sind.

24. Vorrichtung nach einem oder mehreren der Ansprüche 7 bis 23, **dadurch gekennzeichnet,** daß die Rollen (10) und/oder die Stützscheiben (23) aus feuerfestem Material bestehen.

25. Vorrichtung nach einem oder mehreren der Ansprüche 7 bis 24, **dadurch gekennzeichnet,** daß der Abstand benachbarter Rollenrohre (20) voneinander in der Rollenbahn (9) und der Durchmesser der Stützscheiben (23) so gewählt ist, daß die Umfangsringfläche (23 a) einer Stützscheibe nur in geringem Abstand von der Mantelfläche (20 a) der beiden benachbarten Rollenrohre (20) angeordnet ist, so daß sich die Flächen (20 a) und (23 a) nicht berühren.

26. Vorrichtung nach einem oder mehreren der Ansprüche 7 bis 25, **dadurch gekennzeichnet,** daß die Stützscheiben (23 b) eines zu einem bestimmten Rollenrohr (20) benachbarten Rollenrohres (20 b) seitlich derart versetzt zu den Stützscheiben (23) des einen bestimmten Rollenrohres (20) angeordnet sind, daß sich die Stützscheiben

(23) und (23 b) seitlich überlappen.

27. Vorrichtung nach Anspruch 26, **dadurch gekennzeichnet,** daß sich eine Stützscheibenreihe (23 c) aus der Stützscheibenreihe (23 d), die aus den in Längsrichtung bzw. Transportrichtung (27) hintereinander angeordneten Stützscheiben (23) gebildet wird, die jeweils auf jedem übernächsten Rollenrohr (20) sitzen und der Stützscheibenreihe (23 e), die aus den sich in Transportrichtung (27) hintereinander angeordneten Stützscheiben (23 b) gebildet wird und die auf den zwischen den Rollenrohren (20) angeordneten, jeweils übernächsten Rollenrohren (20 b) sitzen, ergibt.

28. Vorrichtung nach einem oder mehreren der Ansprüche 7 bis 27, **gekennzeichnet durch** eine Führungseinrichtung gegen seitliches Driften von Kanalisationssteinzeugmuffenrohren (24).

29. Vorrichtung nach Anspruch 28, **dadurch gekennzeichnet,** daß die Kanalisationssteinzeugmuffenrohre (24) einen Setzring (21 c) aufweisen und daß Stützringe (19 a) vorzugsweise frei drehend auf den Tragrollen (10) seitlich des Setzringes (21 c) angeordnet sind und im Rollkontakt mit dem jeweiligen Setzring (21) stehen.

30. Vorrichtung nach Anspruch 28, **dadurch gekennzeichnet,** daß eine konkave Rille (22 a) dicht hinter der Muffe (25) im Übergang zum Rohrschaft (24 a) des Kanalisationssteinzeugmuffenrohres (24) eingebracht ist, in die formschlüssig ein entsprechend ballig ausgeführter Stützring (10 a) greift.

31. Vorrichtung nach Anspruch 29, **dadurch gekennzeichnet,** daß die Stützscheiben (23, 23 b, 23 f) gleichzeitig als Stützringe ausgebildet sind.

32. Vorrichtung nach einem oder mehreren der Ansprüche 27 bis 31, **dadurch gekennzeichnet,** daß die Längsachse (24 b) des Kanalisationssteinzeugmuffenrohres (24) zum Muffenende entgegengesetzten Ende hin etwas nach unten geneigt gelagert ist.

33. Vorrichtung nach Anspruch 32, **dadurch gekennzeichnet,** daß die Tragrollen (10) geneigt angeordnet sind.

34. Vorrichtung nach Anspruch 32, **dadurch gekennzeichnet,** daß benachbarte Stützringe (10, 10 a) im Durchmesser reduziert ausgebildet sind.

35. Vorrichtung nach Anspruch 27, **dadurch gekennzeichnet,** daß auf einer Achse (25 a) auf seitlichem Abstand eine Scheibe (26) und ein Stützring (27 b) sitzen, der Stützring (27 b) auf der vorzugsweise unglasierten Mantelfläche (9 c) des Kanalisationssteinzeugmuffenrohres (24) abrollt, die unmittelbar hinter der Muffenkante (29 a) angeordnet ist, während die Seitenfläche der Scheibe (26 a) gegen die Frontkante (28) der Muffe (25) oder eines Setzringes stößt.

36. Vorrichtung nach Anspruch 35, **dadurch gekennzeichnet,** daß die Scheibe (26 a) auf einer Achse (25 a) sitzt und der Stützring (27 a) auf einer separaten parallel zur Achse (25 a) verlaufenden Achse (25 b) angeordnet ist und beide Achsen zur Vermeidung einer Reibung zwischen der Scheibe (26 a) bzw. dem Stützring (27 b) und dem Kanalisationssteinzeug muffenrohr (24) mit entsprechend unterschiedlichen Geschwindigkeiten angetrieben sind.

FIG. 1

EP 0 400 351 A1

FIG. 2

EP 0 400 351 A1

FIG. 3

FIG. 4

FIG. 5

FIG. 6

FIG. 7

FIG. 8

FIG. 9

FIG. 10

FIG. 11

FIG. 12

FIG. 13

FIG. 14

5250

FIG. 15

FIG. 16

5259

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A- 290 365 (US CAST IRON PIPE AND FOUNDREY CO.) <br> * Das ganze Dokument * <br> --- | 1,2,4,7 -15 | F 27 B 9/24 <br> F 27 B 9/36 <br> B 65 G 35/00 <br> F 27 D 3/02 |
| A | US-A-4 143 753 (TORSTEN E. BERGENS) <br> * Ansprüche; Figuren * <br> --- | 17 | |
| A | NL-A- 297 669 (KONINKLIJKE VERKADE) <br> * Figur 6; Anspruch 1, Zeilen 1-4 * <br> --- | 20 | |
| A | FR-A-2 600 760 (STEIN HEURTEY) <br> * Ansprüche; Figuren * <br> --- | 20 | |
| A | US-A-2.175 834 (E.S. FATKIN) <br> * Ansprüche; Figuren 2,7 * <br> --- | 21-26 | |
| A | US-A-1 927 634 (F.A. FAHRENWALD) <br> * Seite 2, Zeilen 90-109; Figur 7 * <br> ----- | 29-31 | |

**RECHERCHIERTE SACHGEBIETE (Int. Cl.5)**

F 27 B
F 27 D
C 04 B

Der vorliegende Recherchenbericht wurde für alle Patentansprüche erstellt

| Recherchenort | Abschlußdatum der Recherche | Prüfer |
|---|---|---|
| DEN HAAG | 28-08-1990 | COULOMB J.C. |